# EUROPEAN PATENT SPECIFICATION

(11) **EP 3 769 611 B1**
(45) Date of publication and mention of the grant of the patent: **10.12.2025**
(21) Application number: 19187519.4
(22) Date of filing: 22.07.2019
(51) Int. Cl.: A01G 23/089, A01G 23/083

(54) **A TIMBER WORKING DEVICE**
HOLZBEARBEITUNGSVORRICHTUNG
DISPOSITIF DE TRAVAIL DU BOIS

(43) Date of publication of application: 27.01.2021
(73) Proprietor: Deere & Company, Moline, IL 61265 (US)
(72) Inventor: Alfthan, Arto, 68163 Mannheim (DE)
(74) Representative: Reichert, Christian

(56) References cited:
- EP-A1- 2 074 881
- WO-A1-2008/025880
- CA-A1- 2 196 728

## Description

The present invention concerns a timber working device for felling and/or processing logs and a method for a timber working device.

Mobile work machines, in particular, forestry equipment and forestry machines, e.g. harvesters and forwarders, have an articulated boom and a tree stem processing tool at the tip of the boom. The tool can be e.g. a harvester head, a felling head, a harvesting and processing head, or a log grapple equipped with a sawing apparatus. The tool can be used e.g. to cut standing trees, to process felled trees or to grab objects, such as logs or tree stems. When using such a tool with power-driven operations, it is operated under the control of an operator of the work machine.

The mobile work machines comprise an articulated crane with the tool attached to a boom tip of the crane. Such tools handle heavy load, that may comprise a load of soil or logs or raw material. Usually such cranes are controlled by hydraulic actuators that are driven by hydraulic pressure from one or more pumps. The pumps are usually powered by the primary power source of the vehicle.

The stem processing tool or harvester tool comprises several movable knives that are used to grab the log/tree with the harvester tool. These knives are hydraulically actuated and controlled by the controller mounted on the harvester tool. Once the tree is grabbed with the harvester tool, a saw blade, usually at a bottom side of the harvester tool, is activated to cut the tree/stem. After the cutting process the tree will fall over, only being fixated in the harvester tool by the knives closed around the stem. Usually, within the harvester tool, feeding wheels are activated to pull/push the stem through the harvester tool and the knives, so that bark/branches are removed, and the log/stem is cut up into log pieces of determined size.

When the log/tree is cut and rests on the ground it represents a resistance to the feeding wheels and additional torque and shear forces on the knives of the harvester head. The forces act on the knives in an opening direction, so that the hydraulic control of the knives needs to be adjusted to ensure a correct grip and position on the log to remove bark or branches. At the same time, due to a higher gripping force of the knives, the feeding wheel hydraulic motors also need a higher torque due to the higher gripping force of the knives.

US 7,296,602 discloses tree processing equipment with a two-position pivot point for an actuator end. The equipment comprises two tilt actuators mounted on two sides which can actuate a tilt movement of the equipment/tool to enable a horizontal feeding direction of the log/tree.

This results not only in a higher work load for the machine operator but also in a higher wear on the log and a loss of quality of the product. Due to the higher forces required, the machines fuel consumption is also increased as well as the production and maintenance costs.

CA2196728A1 discloses a slewing assembly for a timber handling apparatus of the type having a workhead connected to a support structure. The workhead is rotatable about a slew axis with respect to the support structure. The assembly provides a slewing mechanism for relative rotational movement of the workhead and the support structure about the slew axis. WO 2008/025880 A1 and EP 2 074 881 A1 disclose harvester heads with a tilt mechanism implementing a pair of actuators on each side of its body.

It is an object of the present invention to overcome the disadvantages.

The invention discloses a timber working device, which comprises a frame, having a feed axis, a drive system, configured to feed at least one stem along the feed axis, a pair of upper knives movably attached to the frame, at least a lower knife, movable attached to the frame, wherein the upper and lower knives are configured to be controllable each by an actuator to open and close around a stem. Further, it comprises a tilt mechanism comprising a tilt bracket pivotably attached to the frame, at least two hydraulic tilt actuators acting between the frame and the tilt bracket to control a tilt position of the frame in relation to the tilt bracket, wherein the two tilt actuators are opposed, so that during a tilt movement, one tilt actuator is extending while the other tilt actuator is retracting at the same time.

The timber working device according to the invention has thus at least two hydraulic tilt actuators, wherein when one tilt actuator extends, the other tilt actuator retracts. Depending on the tilt position of the timber working device the tilt actuators have a different length of extension. Accordingly, the tilt forces acting on the hydraulic tilt actuators are harmonized, so that sufficient hydraulic force is provided by the timber working device at all tilt angles. This reduces the necessary hydraulic force provided by the pumps and accelerates the working procedure.

In another embodiment of the timber working device, the tilt actuators are mounted on opposite sides of the tilt bracket.

The hydraulic tilt actuators can thus work in opposite directions. As one tilt actuator is extending, the other tilt actuator being mounted on the opposite site must retract. The available high tilt torque combined with the wide tilt angle provides ability to eliminate the effect of the skidding force.

The tilt actuators may be mounted on the same side of the tilt bracket.

This can provide additional design space as one side of the tilt bracket is not used. There can be provided some additional control devices or hydraulic lines. Also, the hydraulic tilt actuators may be accessed for maintenance with less effort.

The tilt actuators may comprise double acting hydraulic cylinders.

The tilt forces can be applied in any angled position of the tilt bracket. The hydraulic actuators may act in both directions increasing the possible usable hydraulic efficiency.

The hydraulic tilt actuators may have a different size.

The tilt actuators can have different sizes. The hydraulic force able to be used by the hydraulic actuators can be adapted depending on the work load and the usage of the timber working device. Also, necessary design space can be reduced and thus leaving room for additional devices on the timber working machine.

The hydraulic tilt actuators may have a different length.

Reducing or extending the base length setup of the tilt actuators may save design space. The lever arms can be adapted so that always the highest usable hydraulic force can be used. This further ensures an effective use of hydraulic power, so that all knives of the timber working device can be supplied and the forces are adjusted accordingly.

The hydraulic tilt actuators may have a different power level.

This allows an additional adaption of the tilt actuators depending on their position between the frame and the tilt bracket. It may also be the case that the power of the tilt actuators is dynamically adjusted depending on the control model in regard to the log/stem weight and the necessary forces to tilt.

Further advantages are described in the following figures, wherein
Figure 1 shows a side view of the timber working device according to the invention;
Figure 2 displays a top view of the timer working device according to the invention;
Figure 3 shows an isometric view of the timber working device according to the invention where the tilt bracket is in a 90 degrees angle to the frame;
Figure 4 depicts an isometric view of the timber working device according to the invention where the tils bracket is in an angle of more than 90 degrees to the frame;
Figure 5 displays the available tilt torque of the timber working device according to the invention which is provided by two hydraulic actuators over the angle range.
Figure 6 shows a standard timber working device which is state of the art.

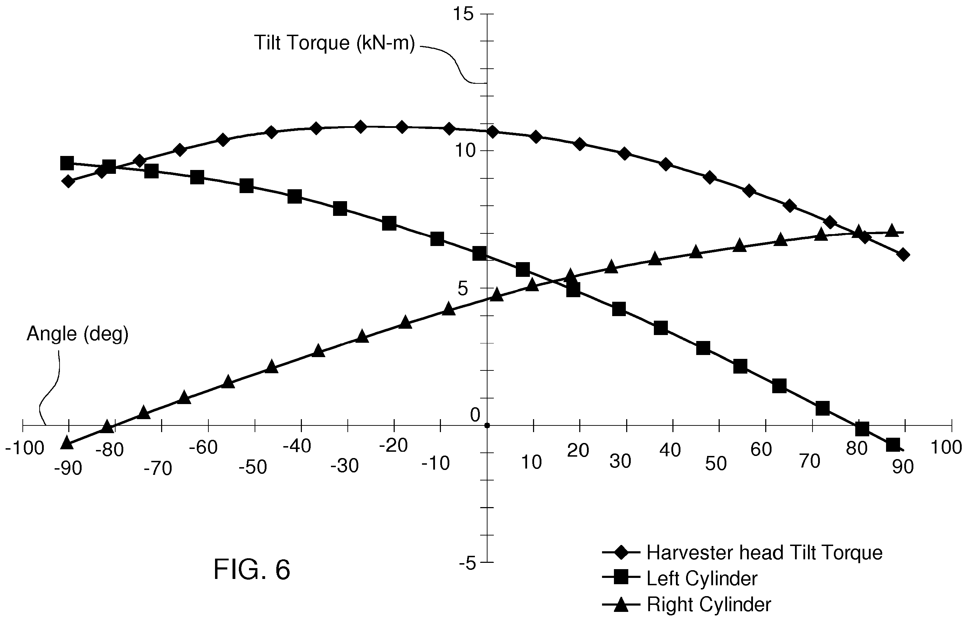

Figure 6 discloses a state-of-the-art harvester head for felling and processing trees. It comprises a frame on which all components are mounted. The harvester head has a feed axis which is oriented with the center line of a tree or stem when the harvester head is attached to the tree. The tree is grabbed by an upper knife which is closed around the tree along with the feeding wheels of the drive system. Once the tree is cut with a saw blade provided in the harvester head, the tree falls over and is feed through the harvester head by the feeding wheels. In predetermined distances the tree is cut into logs.

Especially when the tree is suspended in the harvester head after the felling with one end of the tree being pulled on the ground. When the feeding process is started, the feeding wheels must work against the skidding force of the tree. The skidding force causes also a torque load on the upper and lower knives of the harvester head. The torque momentum is acting in an opening direction of the knifes so that the grip would become weaker. In order to prevent such a loss of gripping force, the actuators 26 controlling the knives are used with a higher hydraulic force to keep the knives in a gripping position. The higher closing force on the knives also increases the friction of the knives on the tree surface. The higher friction requires thus a higher feeding force from the drive system 20 so that the motors driving the feeding wheels require a power increase to pull the tree through the knives. The skidding force leads to a higher workload on the harvester head and a higher fuel consumption.

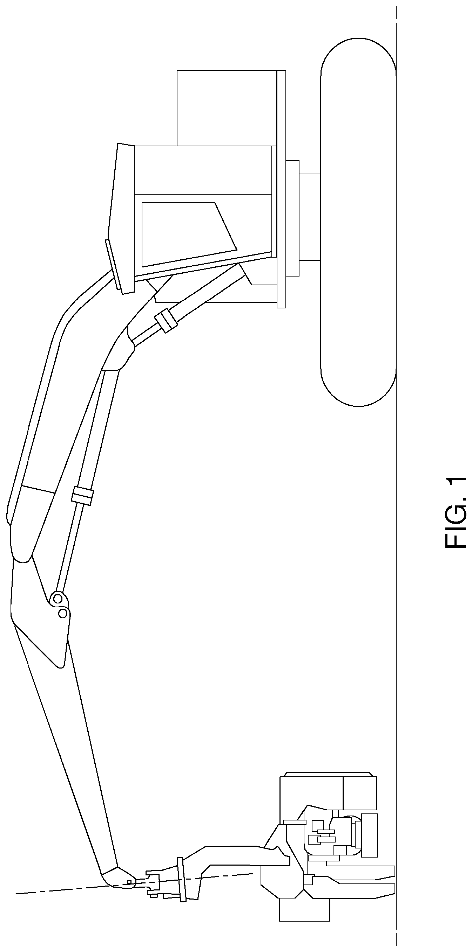

Figure 1 discloses a timber working device of the present invention. It comprises a frame with provided spaces and fix points for at least a saw blade, feeding wheels, hydraulic lines, hydraulic actuators and controllers.

The frame surrounds a feed axis, where a tree or log will be feed through the harvester head during use. On a rear side of the frame a tilt bracket is movably attached to the frame by at least two hinges which allow an angled movement of the tilt bracket in relation to the frame. The tilt bracket is later attached to a crane of a forest working machine and enables relative movement of the frame and the crane.

At least one hydraulic tilt actuator is attached to the tilt bracket and to the frame in a manner that allows to adjust the angle of the tilt bracket and the frame by extending or reducing the tilt actuator. The tilt actuator can be connected to the frame directly or by using an additional fixture which is attached to the frame.

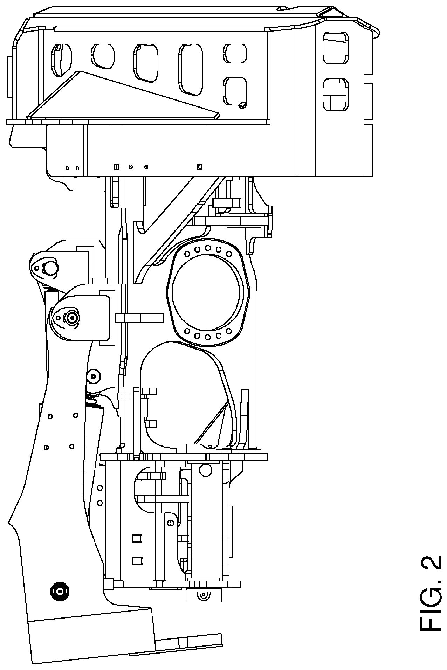

Figure 2 shows the timber working device in a rear view. On a bottom side the frame comprises a saw box for installing a saw blade. The feed axis of the harvester head is positioned about the middle of the frame. The tilt bracket is held in position by two tilt actuators wherein one tilt actuator is in an extended position while the other tilt actuator is in a retracted position. The tilt bracket is held in the same position as in Figure 1.

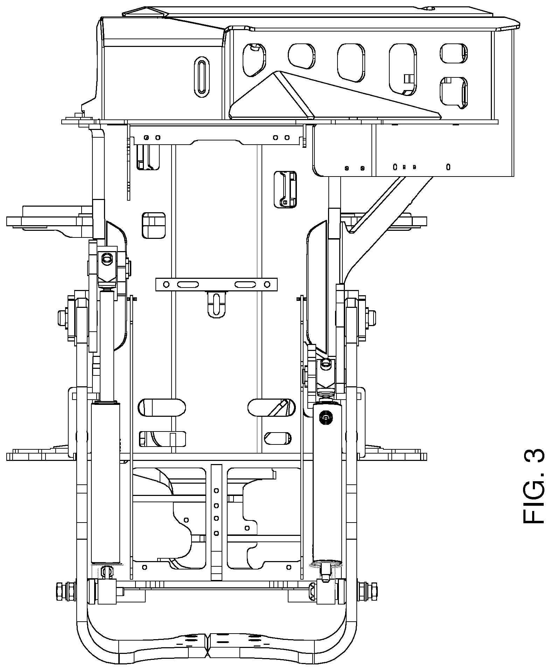

Figure 3 depict the timber working device in a horizontal position. This position reflects the state when the tree is held by the harvester head after cutting. The tilt actuators are used to pull or push the harvester head in a horizontal position. The tilt bracket is positioned in a 90-degree angle to the frame. Both tilt actuators are used to hold the position whereby both tilt actuators are fixed to the tilt bracket and the frame in a way that their forces applied on the tilt bracket are opposed to each other.

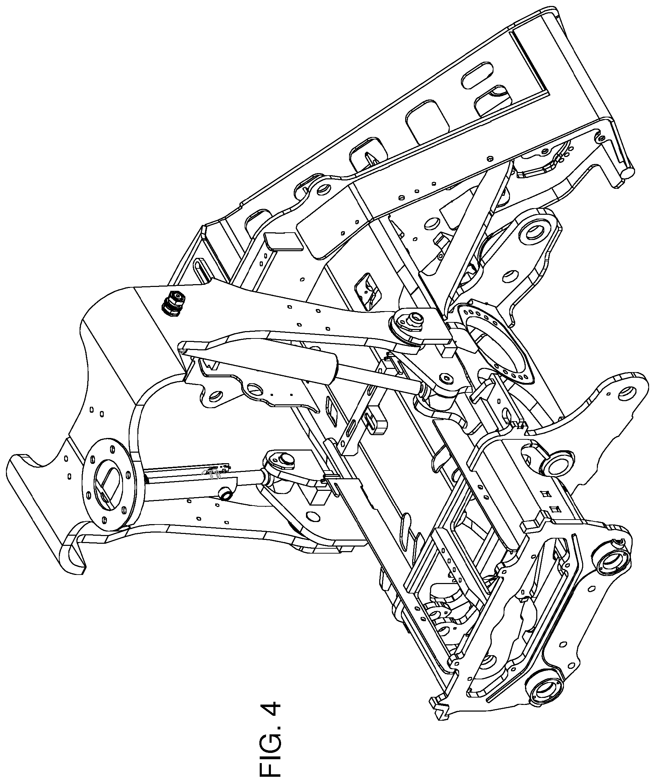

Figure 4 discloses another angle position of the tilt bracket. One tilt actuator is fully extended while the other is fully retracted. This leads to an equalized strain on the hydraulic power system and on the tilt actuators. The tilt force can be maximized while the skidding forces of the tree are reduced and torque resulting in an opening force on the knives are reduced.

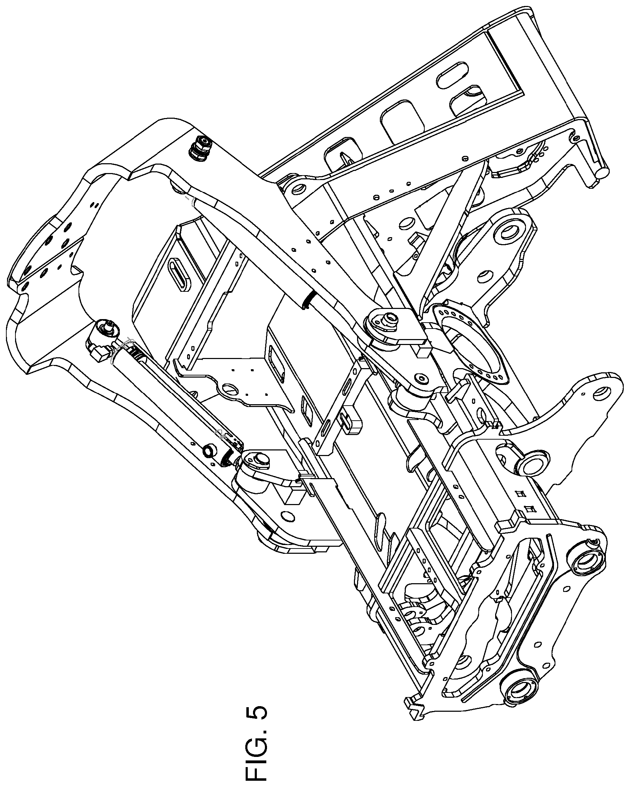

Figure 5 shows a diagram displaying the modulation of the tilt torque during a movement of the tilt bracket and the frame. The angle ranges from -100 degrees to + 100 degrees wherein a center position reflects a 90 degree position of the tilt bracket and the frame, displaying a horizontal arrangement of the harvester head when supported by a crane. The curve depicting triangles represents the right actuator and the curve showing horizontal oriented squares represents the left actuator. The top curve represents the resulting tilt torque of the timber working device or harvester head. In about the horizontal position, shown as 15 degrees, both actuators are delivering the same amount of torque, resulting in an even strain on both actuators. At angles of +100 and -100 degrees only one actuator is working under full torque conditions and when the angle is further adjusted towards the 0 degree angle, the other actuator adds more torque. This leads to the fact that at angles of - 30 degrees to +30 degrees the tilt torque is maximized, offering the maximum torque when the harvester head is in a horizontal position.

## Claims

1. A timber working device, comprising
a frame, having a feed axis
a drive system, configured to feed at least one stem along the feed axis,
a pair of upper knives movably attached to the frame
at least a lower knife, movable attached to the frame,
wherein the upper and lower knives are configured to be controllable each by an actuator to open and close around a stem,
a tilt mechanism, to enable a horizontal feeding direction of the log/tree. comprising a tilt bracket pivotably attached to the frame,
at least two hydraulic tilt actuators acting between the frame and the tilt bracket to control a tilt position of the frame in relation to the tilt bracket,
**characterized in that** the two tilt actuators are opposed, so that during a tilt movement, one tilt actuator is extending while the other tilt actuator is retracting at the same time.

2. Timber working device according to claim 1, **characterized in that** the tilt actuators are mounted on opposite sides of the tilt bracket.

3. Timber working device according to claim 1, wherein the tilt actuators are mounted on the same side of the tilt bracket.

4. Timber working device according to any of the previous claims, wherein the tilt actuators comprise double acting hydraulic cylinders.

5. Timber working device according to any of the previous claims, wherein the tilt actuators have a different size.

6. Timber working device according to any of the previous claims, wherein the tilt actuators have a different length.

7. Timber working device according to any of the previous claims, wherein the tilt actuators have a different power level.

## Patentansprüche

1. Nutzholz-Arbeitsvorrichtung, umfassend:
einen Rahmen mit einer Zuführachse,
ein Antriebssystem, das zum Zuführen mindestens eines Stamms entlang der Zuführachse ausgestaltet ist,
ein Paar obere Messer, die beweglich an dem Rahmen angebracht sind,
mindestens ein unteres Messer, das beweglich an dem Rahmen angebracht ist,
wobei die oberen und unteren Messer so ausgestaltet sind, dass sie jeweils durch einen Aktuator steuerbar sind, um sich um einen Stamm zu öffnen und zu schließen,
einen Kippmechanismus, um eine horizontale Zuführrichtung des unbearbeiteten Holzstamms/Baums zu ermöglichen, umfassend
eine Kipphalterung, die schwenkbar an dem Rahmen angebracht ist,
mindestens zwei hydraulische Kippaktuatoren, die zwischen dem Rahmen und der Kipphalterung wirken, um eine Kippposition des Rahmens in Bezug auf die Kipphalterung zu steuern,
**dadurch gekennzeichnet, dass** die beiden Kippaktuatoren einander gegenüberliegen, so dass bei einer Kippbewegung ein Kippaktuator ausfährt, während sich der andere Kippaktuator gleichzeitig zurückzieht.

2. Nutzholz-Arbeitsvorrichtung nach Anspruch 1, **dadurch gekennzeichnet, dass** die Kippaktuatoren an gegenüberliegenden Seiten der Kipphalterung montiert sind.

3. Nutzholz-Arbeitsvorrichtung nach Anspruch 1, wobei die Kippaktuatoren an derselben Seite der Kipphalterung montiert sind.

4. Nutzholz-Arbeitsvorrichtung nach einem der vorhergehenden Ansprüche, wobei die Kippaktuatoren doppeltwirkende Hydraulikzylinder umfassen.

5. Nutzholz-Arbeitsvorrichtung nach einem der vorhergehenden Ansprüche, wobei die Kippaktuatoren eine unterschiedliche Größe aufweisen.

6. Nutzholz-Arbeitsvorrichtung nach einem der vorhergehenden Ansprüche, wobei die Kippaktuatoren eine unterschiedliche Länge aufweisen.

7. Nutzholz-Arbeitsvorrichtung nach einem der vorhergehenden Ansprüche, wobei die Kippaktuatoren ein unterschiedliches Leistungsniveau aufweisen.

## Revendications

1. Dispositif de travail du bois, comprenant un cadre, ayant un axe d'alimentation
un système d'entraînement, conçu pour alimenter au moins une tige le long de l'axe d'alimentation,
une paire de couteaux supérieurs fixés de manière mobile au cadre
au moins un couteau inférieur, fixé de manière mobile au cadre,
les couteaux supérieurs et inférieurs étant conçus de sorte à pouvoir être commandés chacun par un actionneur pour s'ouvrir et se fermer autour d'une tige,
un mécanisme d'inclinaison, pour permettre une direction d'alimentation horizontale de la grume/l'arbre, comprenant
un support d'inclinaison fixé pivotant au cadre,
au moins deux actionneurs d'inclinaison hydrauliques agissant entre le cadre et le support d'inclinaison pour commander une position d'inclinaison du cadre par rapport au support d'inclinaison,
**caractérisé en ce que** les deux actionneurs d'inclinaison sont opposés, de sorte que lors d'un mouvement d'inclinaison, un actionneur d'inclinaison s'étende tandis que l'autre actionneur d'inclinaison se rétracte en même temps.

2. Dispositif de travail du bois selon la revendication 1, **caractérisé en ce que** les actionneurs d'inclinaison sont montés sur des côtés opposés du support d'inclinaison.

3. Dispositif de travail du bois selon la revendication 1, les actionneurs d'inclinaison étant montés sur le même côté du support d'inclinaison.

4. Dispositif de travail du bois selon l'une quelconque des revendications précédentes, les actionneurs d'inclinaison comprenant des vérins hydrauliques à double effet.

5. Dispositif de travail du bois selon l'une quelconque des revendications précédentes, les actionneurs d'inclinaison ayant une taille différente.

6. Dispositif de travail du bois selon l'une quelconque des revendications précédentes, les actionneurs d'inclinaison ayant une longueur différente.

7. Dispositif de travail du bois selon l'une quelconque des revendications précédentes, les actionneurs d'inclinaison ayant un niveau de puissance différent.
